(19) Europäisches Patentamt
European Patent Office
Office européen des brevets

(11) Publication number : **0 614 945 A2**

(12) **EUROPEAN PATENT APPLICATION**

(21) Application number : **94301421.7**

(22) Date of filing : **28.02.94**

(51) Int. Cl.$^5$ : **C08L 67/02,** C08L 55/02, C08L 25/12

(30) Priority : **12.03.93 US 30998**

(43) Date of publication of application :
**14.09.94 Bulletin 94/37**

(84) Designated Contracting States :
**DE ES FR GB IT NL**

(71) Applicant : **GENERAL ELECTRIC COMPANY**
**1 River Road**
**Schenectady, NY 12345 (US)**

(72) Inventor : **Kuruganti, Vijaya Kumar**
**1515 20th Street**
**Parkersburg, West Virginia 26101 (US)**
Inventor : **Angeli, Stephen Richard**
**5496 Northwood Drive**
**Hickory, North Carolina 28601 (US)**
Inventor : **Wozny, John Carl**
**24025 Brister Road,**
**P.O. Box 112**
**Coolville, Ohio 45723 (US)**

(74) Representative : **Pratt, Richard Wilson et al**
**London Patent Operation**
**G.E. Technical Services Co. Inc.**
**Essex House**
**12/13 Essex Street**
**London WC2R 3AA (GB)**

(54) **Improvements of surface appearance in PBT/SAN/ABS blends.**

(57) Thermoplastic blend compositions are Provided containing a Polybutylene terephthalate resin, a rubber modified graft copolymer, and a rigid vinyl aromatic vinyl cyanide copolymer wherein the melt viscosity of the polybutylene terephthalate resin is lower than a blend consisting of the rigid copolymer and rubber modified graft copolymer to improve the surface appearance of the composition upon injection molding thereof. The compositions are useful for making molded articles.

EP 0 614 945 A2

## BACKGROUND OF THE INVENTION

## FIELD OF THE INVENTION

The present invention relates to polyester/rubber modified graft copolymer blends, and more particularly, relates to polybutylene terephthalate/acrylonitrile-butadiene-styrene graft copolymer blends exhibiting improved surface appearance.

## DESCRIPTION OF THE RELATED ART

Blends of high molecular weight polybutylene terephthalate resin (PBT), acrylonitrile-butadiene-styrene graft copolymers (ABS), and non-grafted styrene-acrylonitrile copolymers (SAN) are known. When such blends are injection molded they often exhibit chattering surface blemishes. Injection molding of these PBT/SAN/ABS blends quite often result in chattering surface blemishes, especially at lower stock temperatures (460°F) and higher injection speeds (> 2"/sec.).

Consequently, there is a desire to provide polybutylene terephthalate resin/acrylonitrile-butadiene-styrene graft copolymer/non-grafted styrene-acrylonitrile copolymer blends that exhibit improved surface appearances following injection molding thereof.

## SUMMARY OF THE INVENTION

The present invention involves thermoplastic compositions comprising polybutylene terephthalate resin, a rubber modified graft copolymer, and a non-grafted, rubber free, rigid vinyl aromatic/vinyl cyanide copolymer, wherein the Mobay melt viscosity at shear rate of the polybutylene terephthalate is sufficiently lower than that of a blend of the rigid copolymer and rubber modified graft copolymer to improve the surface appearance of the composition upon injection molding thereof. The compositions are useful for making molded articles.

## DETAILED DESCRIPTION OF THE INVENTION

Thermoplastic polyesters such as polyalkylene terephthalate and polybutylene terephthalate polymers are well known in the art. Polybutylene terephthalate polymers in general are disclosed, for example, in U.S. Patents Nos. 4,066,627; 4,184,033; 4,069,278 and 4,593,077, all of which are incorporated herein by reference.

The polybutylene terephthalates contain at least 90 mole percent, based on the dicarboxylic acid component, of terephthalic acid residues and at least 90 mole percent, based on the diol component of 1.4 butane diol residues.

In addition to terephthalic acid residues, the polybutylene terephthalates may contain up to 10 mole percent of residues of other aromatic, aliphatic or cycloaliphatic dicarboxylic acids, for example succinic acid, adipic acid or isophthalic acid residues. In addition to butane diol residues, they may contain up to 10 mole percent of residues of another diol which may correspond to the following formula:

$$HO\text{-}C_nH_{2n}\text{-}OH$$

in which n is an integer of from 2 to 10. More particularly, up to 10 mole percent of alkyl-substituted diols such as neopentyl glycol. 2.2.4-trimethyl-1.6-hexane diol, 2-ethyl-1.3-propane diol, 2.2.4-trimethyl-1.3-pentane diol, 2-methyl-2.4-pentane diol, 3-methyl-2.4-pentane diol or 2-ethyl-1.3-hexane diol may also be incorporated (German Offenlegungsschrifts Nos. 2.407,674, 2,407,776 and 2,715,932).

The rubber modified graft copolymer which is included in the compositions of the invention comprises a rubber substrate and a grafted portion grafted to the rubber substrate. The rubber substrate is formed from at least one diene monomer of the formula:

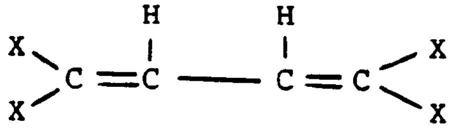

wherein X is selected from the group consisting of hydrogen, alkyl groups containing from 1 to 5 carbon atoms, chlorine and bromine. Examples of the diene monomer include butadiene, isoprene, 1, 3-heptadiene, methyl-1,3-pentadiene, 2-ethyl-1,3-pentadiene, mixtures thereof and the like. Preferably, the diene monomer comprises butadiene, wherein the rubber substrate comprises a polybutadiene substrate. Alternatively, at least one

additional styrene monomer may be included in the rubber substrate, thereby forming, for example, a styrene-butadiene rubber substrate. Although the graft copolymer may include the rubber substrate and the grafted portion in any ratio which is desired, it is preferred that the graft copolymer comprises at least 10 weight percent of the rubber substrate, and more preferably at least 40 weight percent of the rubber substrate based on the total weight of the graft copolymer.

The grafted portion of the graft copolymer is preferably formed from at least one vinyl aromatic monomer and at least one vinyl cyanide monomer. The at least one vinyl aromatic monomer may comprise unsubstituted styrene monomer, substituted styrene monomer, or mixtures thereof. Substituted styrene monomers may include substituents on the aromatic portion and/or the vinyl portion, with preferred substituents being selected from the group consisting of alkyl groups of from 1 to 5 carbon atoms and halogen atoms such as chlorine and bromine. Preferred vinyl aromatic monomers include unsubstituted styrene, alphamethylstyrene, dibromostyrene and mixtures thereof. The at least one vinyl cyanide monomer which is employed in forming the grafted portion is preferably selected from the group consisting of acrylonitrile and methacrylonitrile. In a preferred embodiment, the grafted portion is formed from a styrene monomer and acrylonitrile, with the styrene and acrylonitrile being employed in a weight ratio of at least about 1:1, and more preferably, at least about 3:1.

The graft copolymer may be formed by any of the methods well known in the art for the formation of ABS graft copolymers. For example, the graft copolymer may be formed by emulsion polymerization wherein the at least one styrene monomer and the at least one additional monomer are polymerized in the presence of the rubber substrate. As is well known in the art, such a process often results in the formation of the grafted copolymer and an additional polymer of the at least one vinyl aromatic monomer and the at least one vinyl cyanide monomer, which copolymer does not contain the rubber substrate.

The compositions of the present invention employ a polybutylene terephthalate resin having a sufficiently lower melt viscosity at shear rate than a blend of the rigid copolymer and rubber modified graft copolymer so as to provide a composition having improved surface characteristics, that is reduced levels of surface blemishes. Preferably the polybutylene terephthalate resin has Mobay melt viscosities at 500°F of 700 to 1,500 poise at shear rates of 1,000 per second, and more preferably between 750 and 1,000 poise at shear rates of 1,000/second. Preferably the non-grafted rigid copolymer and graft copolymer when blended together have a combined Mobay melt viscosity at 500°F of between 1,600 and 3,000 poise at shear rates of 1,000/sec., more preferably between 2,000 and 2,500 poise at shear rates of 1,000/second. Preferably the final thermoplastic composition has a Mobay melt viscosity at 500°F of between 700 and 1,550 poise at a temperature of 500°F and at a shear rate of 1,000/second. The present invention involves using a low molecular weight polybutylene terephthalate resin in polybutylene terephthalate, graft copolymer, rigid copolymer blends to achieve an improved surface appearance.

The compositions comprise, preferably consist essentially of, and optionally consist of the polybutylene terephthalate, the graft copolymer, and the rigid copolymer with or without minor amounts of other additives.

Suitable additional additives include organic phosphite esters such as bis(2,4 di-t-butyl) pentaerythritol diphosphite, phenolic antioxidants, dilauryldithiopropionate, polyolefin lubricant or pentaerythritol tetrastearate, trisnonylphenyl phosphite, carbon black and/or pigment.

Preferably, the compositions comprise from about 10 to about 90 weight percent of the low melt viscosity polybutylene terephthalate, from about 5 to about 90 weight percent of the graft copolymer, and from 10 to about 60 weight percent of the non-grafted rigid styrene-acrylonitrile copolymer based on the total weight of the composition. In a further preferred embodiment, the compositions comprise from about 25 to about 75 weight percent of the polybutylene terephthalate, from about 15 to about 55 weight percent of the graft copolymer, and from about 15 to about 55 weight percent of the non-grafted rigid vinyl aromatic-vinyl cyanide copolymer.

Most preferably the composition comprises polybutylene terephthalate present at of from 30 to 50 percent by weight based on the total weight of the composition, the non-grafted rigid vinyl aromatic-vinyl cyanide copolymer is present at a level of from 20 to 50 percent by weight based on the total weight of the composition, and the graft copolymer is present at a level of from 20 to 40 percent by weight based on the total weight of the composition.

Examples

Table I

| | A | 1 |
|---|---|---|
| PBT 1 | 45 | -- |
| PBT 2 | -- | 45 |
| SAN 1 | 22 | 22 |
| ABS 1 | 33 | 33 |
| Surface Appearance Rating** | 5 | 1 |

**Surface Appearance Rating:
0 = Smooth surface with no visible blemishes
1 = Very faintly visible surface blemishes
2 = Faintly visible surface blemishes
3 = Visible surface blemishes
4 = Very visible surface blemishes
5 = Very badly visible surface blemishes

From Table I it is quite evident that the experimental blend 1 which contains a lower viscosity PBT than the melt viscosity of the ABS1/SAN1 blend results in a composition exhibiting a much better surface appearance than the control A which contains higher melt viscosity polybutylene terephthalate which has a much higher melt viscosity than the ABS1/SAN1 blend.

All blends are melt compounded in a twin screw extruder at 500°F and injection molded at 460°F and the injection speed was maintained at 4"/sec.. Examples 1 and A contain the same ingredients in the same amounts except example 1 contains a lower viscosity PBT than does comparative example A.

PBT 1 is a polybutylene terephthalate resin having a Mobay melt viscosity of 3,436 poise at 500°F and a shear rate of 1,000/second.

PBT 2 is a polybutylene terephthalate resin having a Mobay melt viscosity of 812 poise at 500°F and at a shear rate of 1,000/second.

SAN 1 rigid styrene acrylonitrile copolymer having 75 weight percent styrene and 25 weight percent acrylonitrile.

ABS 1 is a rubber modified graft copolymer comprising 50 weight percent polybutadiene rubber having grafted thereon a copolymer of styreneacrylonitrile in a weight ratio of 3:1.

The blend of 22 parts by weight SAN 1 and 33 parts by weight ABS 1 has a Mobay melt viscosity of 2,454 poise at 500°F and at a shear rate of 1,000/second.

Examples 1 and A contained 0.25 weight percent of bis(2,4 di-t-butyl) pentaerythritol diphosphite available from GE Specialty Chemicals, Inc. under the trademark Ultranox 626 phosphites; 0.25 weight percent Goodrite 3114 which is a hindered phenolic compound; .125 weight percent DLDTP which is dilauryldithiopropionate; 0.75 weight percent Emery 3008 which is fatty acid ester of pentaerythritol.

## Claims

1. A thermoplastic resin composition comprising
(a) a thermoplastic polybutylene terephthalate resin having a Mobay melt viscosity of 700 to 1,500 poise at 500°F at a shear rate of 1,000/sec.
(b) a graft copolymer comprising a diene rubber having grafted thereon at least one vinyl aromatic monomer and at least one vinyl cyanide monomer, and
(c) a non-grafted rigid copolymer of at least one vinyl cyanide monomer and at least one vinyl aromatic

monomer, provided that a blend consisting of said graft copolymer and said rigid copolymer has a Mobay melt viscosity of 1,600 to 3,000 poise at 500°F at a shear rate of 1,000/sec.

2. The composition of Claim 1 wherein said polybutylene terephthalate is present at a level of from 30 to 50 percent by weight based on the total weight of the composition, said graft copolymer is present at a level of from 20 to 40 percent by weight based on the total weight of the composition, and said rigid copolymer is present at a level of from 20 to 50 percent by weight based on the total weight of the composition.

3. The composition of Claim 2 further containing from 0.01 to 5 percent by weight of at least one additive selected from the group consisting of carbon black, organic pigments, olefinic mold releases, dilauryldithiopropionate, organic phosphite esters.

4. The composition of claim 1 wherein said composition consists essentially of said polybutylene terephthalate, said graft copolymer, and said non-grafted rigid copolymer.

5. The composition of claim 4 wherein said graft copolymer is an acrylonitrile-butadiene styrene graft copolymer, and said rigid copolymer is an styrene-acrylonitrile copolymer.

6. A process for obtaining an injection molded polybutylene terephthalate/graft copolymer blend having an improved surface appearance; said process comprising injection molding a composition comprising:
(a) a thermoplastic polybutylene terephthalate resin having a Mobay melt viscosity of 700 to 1,500 poise at 500°F at a shear rate of 1,000/sec.,
(b) a graft copolymer comprising a diene rubber having grafted thereon at least one vinyl aromatic monomer and at least one vinyl cyanide monomer, and
(c) a non-grafted rigid copolymer of at least one vinyl cyanide monomer and at least one vinyl aromatic monomer, provided that a blend consisting of said graft copolymer and said rigid copolymer has a Mobay melt viscosity of 1,600 to 3,000 poise at 500°F at a shear rate of 1,000/sec.

7. The process of claim 6 wherein said composition consists essentially of said polybutylene terephthalate, said graft copolymer, and said rigid copolymer.